# EUROPEAN PATENT APPLICATION

(11) **EP 2 354 614 A1**
(43) Date of publication of application: **10.08.2011**
(21) Application number: 11150212.6
(22) Date of filing: 05.01.2011
(51) Int. Cl.: F16L 21/04

(54) **Grip ring**

(30) Priority: 05.01.2010 GB 1000125
(71) Applicant: Hayward Tyler Group Limited, Luton LU1 3LD (GB)
(72) Inventor: Morrow, Paul Joseph, Knebworth, Hertfordshire SG3 6AX (GB)
(74) Representative: Frost, Alex John

(57) **Abstract**

A grip ring (10) comprises a plurality of annular segments (20), coupled by means of a plurality of resilient linkages (30). The resilient linkages (30) have an ogival shape and are biased to resist radial compression of the grip ring (10) . A method of gripping an elongate member comprises: providing such a grip ring (10); positioning the grip ring (10) such that the elongate member runs through the centre of the grip ring; and compressing the grip ring axially, to force the grip ring radially inwards thereby, such that the grip ring is compressed upon the elongate member.

## Description

### Technical Field of the invention

The present invention relates to a grip ring for use with, for example, a cable or pipe, and a method of gripping an elongate member, such as a cable or pipe.

### Background to the invention

A grip ring is a well-known device, especially used for coupling a pipe or cable to an appropriate fitting. A grip ring is typically of annular shape and fits around the cable or pipe. A radial compressive force causes the grip ring to hold the cable or pipe and thereby prevent its movement.

GB-2377737 describes a grip ring formed from a plurality of segments that are coupled by secure hinges to form an annulus. The hinges are flexible to allow radial compression of the grip ring to a limited extent. Nevertheless, the diameter of the grip ring is essentially defined by the number of segments that are connected together. Once assembled, dismantlement of the grip ring is made difficult by the hinging arrangement used.

Other grip rings in existing products are split to allow them to be compressed to a smaller diameter, but the diameter range for such grip rings is nevertheless relatively limited. Pipe and cable couplings are increasingly designed with larger diameter range capabilities, resulting in less stock holding for users.

GB-1258369 describes an alternative grip ring comprising a plurality of segments, that are held together by a spring retaining ring, or springs provided on the faces of the segments to link them together. A spring retaining ring or linking springs of this type provide a radial compressive force that holds the grip ring onto a shaft. An outer tubing is positioned over the grip ring and prevents it from being dislodged.

Thus, existing grip ring arrangements cannot easily be used for cables or pipes across a wide range of diameters, and once used for a cable or pipe of a given diameter cannot easily be used for a cable or pipe of a different diameter, without additional support being provided to prevent dislodgment of the grip ring.

### Summary of the invention

Against this background, the present invention provides a grip ring, comprising: a plurality of annular segments, coupled by means of a plurality of resilient linkages, the resilient linkages having an ogival shape and being biased to resist radial compression of the grip ring. It will be understood that an ogive describes a roundly tapered shape, which may or may not form a point at an end. This shape is also referred to as the architectural Gothic arch shape. The ogival form allows the linkage to be compressed axially without over-stressing the material locally.

The resilient linkages, which as resilient in the sense that they return towards their original shape when deformed, make it possible to use the grip ring together with a cable or pipe of diameter across a wide range. They also make it easier to re-use the grip ring for pipes or cables of different diameter. Moreover, since these resilient linkages are biased to resist radial compression of the grip ring, the grip ring retains its shape when no forces are applied to it.

Advantageously, the plurality of annular segments are shaped to convert axial compression of the grip ring into radial compression of the grip ring. This allows the grip ring to be used with pipes or cables of a variety of diameters and to be compressed radially to the optimal diameter, by holding the grip ring in place axially.

In the preferred embodiment, the plurality of annular segments are formed such that the grip ring is frustoconically shaped. In other words, the annular segments are segments of a frustoconical annulus. Preferably, the grip ring defines an axis (passing through its centre and perpendicular to the plane of its circumference) and the plurality of annular segments are shaped such that their frustoconical surface of the grip ring is at an angle of 45 degrees to the axis. This angle controls the load applied to the gripped surface of the grip ring, and in combination with the friction coefficients of the mating surfaces, controls the level of wedging or self release that occurs when the clamping load is released. 45 degrees appears to be an optimal angle.

In some embodiments, at least one surface of each of the plurality of annular segments adjacent the resilient linkage is sloped.

Optionally, the plurality of resilient linkages are elastic. The resilient linkages will return to their original shape when deformed by compression or expansion. Preferably, the plurality of resilient linkages are formed as hinges.

In one embodiment, one resilient linkage from the plurality of resilient linkages is formed in two parts, the two parts being coupled to form the resilient linkage.

Advantageously, the plurality of annular segments and the plurality of resilient linkage are integrally formed together. This is preferably through moulding and is especially beneficial for fabrication using thermoplastic materials.

Alternatively, the plurality of annular segments are individually formed. This structure is particularly advantageous for fabrication in metallic materials.

Then, each of the plurality of annular segments may optionally comprise at least one recess, and each of the plurality of resilient linkages may optionally comprise at least one projection, the at least one projection being shaped to correspond with the at least one recess. This allows the separate annular segments and resilient linkages to be coupled together. In one embodiment, the at least one projection comprises a plug formation and the at least recess comprises a corresponding socket formation. In another embodiment, the at least one projection comprises a tongue formation and the at least recess comprises a corresponding slit formation.

In some embodiments, at least one of: the plurality of annular segments; and the plurality of resilient linkages are formed from a thermoplastic. Preferably, the plurality of annular segments; and the plurality of resilient linkages are all formed from a thermoplastic. Other materials can alternatively be used, such as metals.

Preferably, the plurality of resilient linkages are each substantially identical in shape.

In the preferred embodiment, the grip ring defines an axis, and the plurality of annular segments are each shaped such that one surface of the grip ring is substantially perpendicular to the axis. Using one such flat surface allows the grip ring to be used on an end portion (closing end) of a cable or pipe, as its axial position is not affected by the tightening action.

Beneficially, at least one of the plurality of annular segments comprises a friction surface, the friction surface being located on the inner surface of the grip ring and comprising an adaptation for friction. The friction surface is therefore the surface of the annular segment corresponding with the inner surface of the annulus from which the annular segment is derived. In the preferred embodiment, each of the plurality of annular segments comprises such a friction surface.

In some embodiments, the adaptation for friction may comprise at least one of: a protrusion on the friction surface; a teeth-formation on the friction surface; a thermally-sprayed metal layer; an aluminium oxide grit layer.

Optionally, at least one of the plurality of annular segments comprises a recess located on the inner surface of the grip ring, the grip ring further comprising a wedge adapted to fit into the recess of the annular segment.

In a second aspect, the present invention may be found in a method of gripping an elongate member, comprising: providing a grip ring comprising a plurality of annular segments coupled by means of resilient linkages to form a ring shape, the resilient linkages having an ogival shape and being biased to resist radial compression of the grip ring; positioning the grip ring such that the elongate member runs through the centre of the grip ring; and compressing the grip ring axially, to force the grip ring radially inwards thereby, such that the grip ring is compressed upon the elongate member. The elongate member is preferably a pipe or cable.

The skilled person will appreciate that the grip ring as described with respect to the first aspect of the present invention may be used in connection with this second aspect, which comprises a method.

### Brief description of the drawings

Embodiments of the invention will now be described, by way of example only, with reference to the accompanying drawings, in which:
Figure 1 shows a perspective view of a first embodiment of the present invention, comprising 12 segments;
Figure 2 shows a second embodiment of the present invention, comprising 9 segments;
Figure 3 shows a cross-section of a typical assembly using the embodiment of Figure 1 or Figure 2;
Figure 4 shows a third embodiment of the present invention, comprising 12 segments, where the segments are formed separately from linkages;
Figure 5 shows a first embodiment of a segment and a linkage for use in the embodiment of Figure 4;
Figure 6 shows the segment and linkage of Figure 5 when coupled together;
Figure 7 shows a cross-sectional view of a second embodiment of a segment and a linkage for use in the embodiment of Figure 4;
Figure 8 shows a perspective view of the segment and linkage of Figure 7 when coupled together;
Figure 9 shows an adaptation in the design of a segment for use with the present invention;
Figure 10 shows a cross-sectional view of an alternative design of a segment for use with the present invention; and
Figure 11 shows a perspective schematic view of the design of Figure 10.

### Description of a specific embodiment

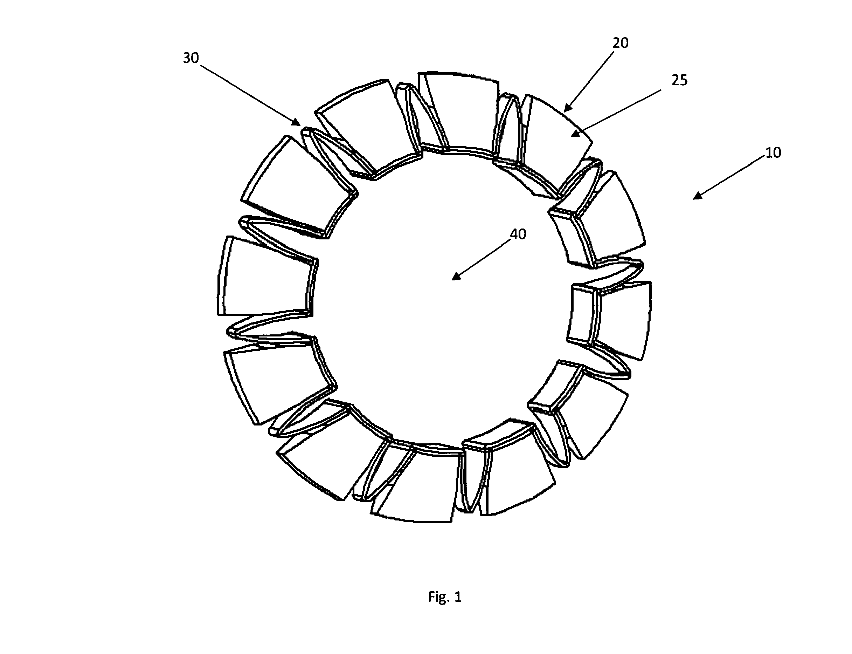

Referring first to Figure 1, there is shown a first embodiment of a grip ring 10 according to the present invention. The grip ring 10 comprises: a plurality of annular segments 20; and a plurality of resilient linkages 30. The resilient linkages 30 couple the annular segments 20 together into a ring shape. The grip ring therefore has a centre 40. One surface 25 of each of the annular segments 20 is shown.

The annular segments 20 are shaped such that, when assembled, the grip ring assumes a frustoconical shape. This is due to the slope of the surface 25 of each of the annular segments 20. The grip ring defines an axis perpendicular to plane defined by its circumference, which passes through the centre 40 of the grip ring 10. The shown surface 25 of the annular segments 20 is slanted at 45 degrees to the plane of the grip rings circumference, and in other words, at 45 degrees to the axis defined by the grip ring.

The resilient linkages 30 maintain a uniform spacing of the annular segments, and may be otherwise referred to as flexible hinges. These hinges are designed so that, if the ring is manufactured from a typical thermoplastic, the stresses will be sufficiently low to allow repeated use of the part. In this embodiment, these hinges have an ogival (gothic arch) shape. This form allows the hinge to be compressed axially without over-stressing the material locally.

The ogival or arch form is designed to limit local bending stresses on the resilient linkage. Maximum contact between the pipe or cable surface and the surface of the resilient linkage is preferable. The ogival form described appears to give the smallest form without large relief in the sides of the annular segments. The sides of the annular segments may be relieved slightly to prevent crushing or snapping of the tip of the arch.

A large tip radius in nylon or acetal will not compress flat without fracture. Similarly, if the angle of attachment between the annular segments 20 and the resilient linkages 30 is too great, fracture may result at that location when compressed.

Using thermoplastic for the grip ring allows the annular segments and resilient linkage arrangement to be produced either by injection moulding or selective laser sintering in a single piece.

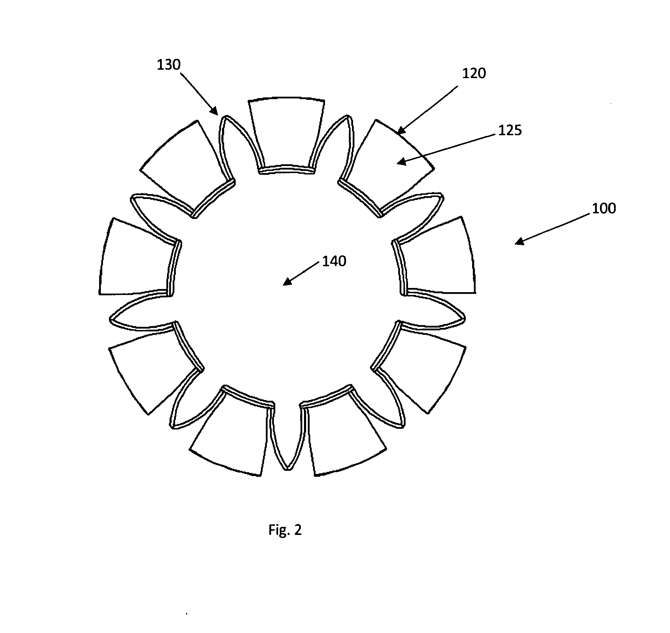

Referring next to Figure 2, there is shown a second embodiment of a grip ring 100 according to the present invention. The grip ring 100 comprises: annular segments 120; and resilient linkages 130. The structure of the grip ring 100 is essentially the same as the grip ring 10 shown in Figure 1. However, the grip ring 100 in Figure 2 comprises only 9 segments, whereas the grip ring 10 in Figure 1 comprises 12 segments. This grip ring 100 is therefore more suitable for pipes or cables of a smaller diameter (50 to 67.5 mm) than the 12-segment grip ring 10 (67.5 to 85 mm). A further 20-25% reduction in diameter is possible through radial compression of the grip ring.

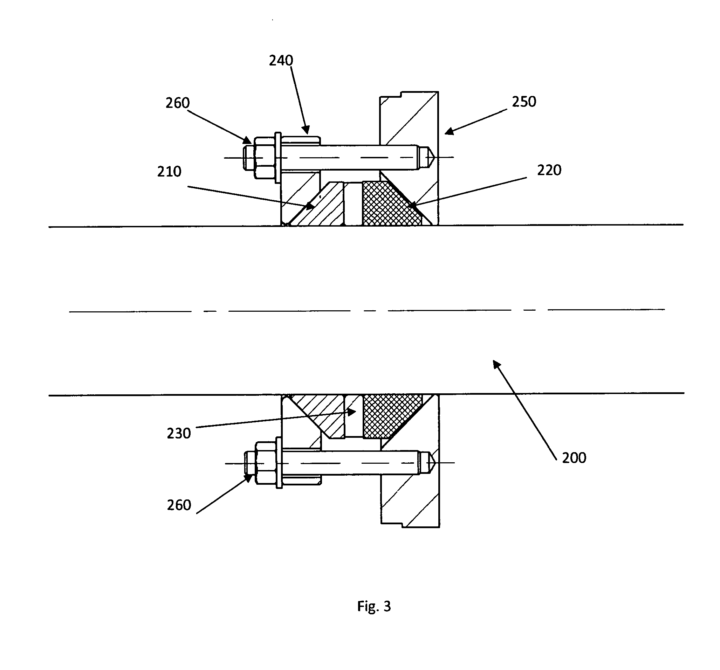

Referring now to Figure 3, there is shown a typical assembly using a grip ring 210, which in practice, may be either the grip ring 10 shown in Figure 1 or the grip ring 100 shown in Figure 2. The typical assembly comprises: pipe 200; grip ring 210; seal 220; spacer plate 230; end plate 240; seal plate 250; and bolts 260. The axial compression of the grip ring 210 between end plate 240 and seal plate 250 causes radial compression of the grip ring 210 around the pipe 200. This is due to the sloped surface of the grip ring 210 that converts this axial compression into a radial compression.

As the grip ring 210 is compressed axially between end plate 240, with an inverse conical inner face, and a flat spacer plate 230, the grip ring 210 is forced radially inwards to grip onto the pipe 200. The resilient linkages continue to maintain the uniform spacing of the annular segments.

The grip ring 210 can be applied to a range of pipe (or cable) diameters. The bottom tolerance of the range is defined by the diameter of the grip ring 210 when the annular segments abut meridionally.

The angle of the sloped surface of the annular segments provides the frustoconical shape of the grip ring 210 and controls the load applied to the gripped surface of the grip ring 210. This angle combined with the friction coefficients of the mating surfaces controls the level of wedging or self release that occurs when the clamping load is released.

When assembling pipes and couplings it is likely that the last section of pipe will be attached to a fixed flange. This piece of pipe is referred to as the closing length. When the coupling is tightened onto the pipe there is a risk that it will grip before a good seal has been developed. This is not usually a significant issue with thermoplastic pipe materials where a bow can be formed in the pipe to allow it to be pulled into the coupling, but rigid materials such as steel and ductile iron cannot be treated in this way.

The surface opposite the sloped surface of the annular segments is flat and in the plane of the grip ring circumference (in other words, perpendicular to the access defined by the grip ring). Using one such surface allows the grip ring to be used on a closing length of a pipe, as its axial position is not affected by the tightening action.

The surface (not shown) of the grip ring 210 that abuts the pipe 200 comprises a plurality of teeth or a high friction coating (thermal sprayed metal or aluminium oxide grit bonded to the inner faces of the annular segments). This design is dependant on the material being gripped and the acceptability of local damage. For example, teeth may not be allowable on a thermoplastic cable insulation, because of local damage. The high friction coating would be required for gripping cast iron pipe also, as teeth cannot penetrate the pipe surface.

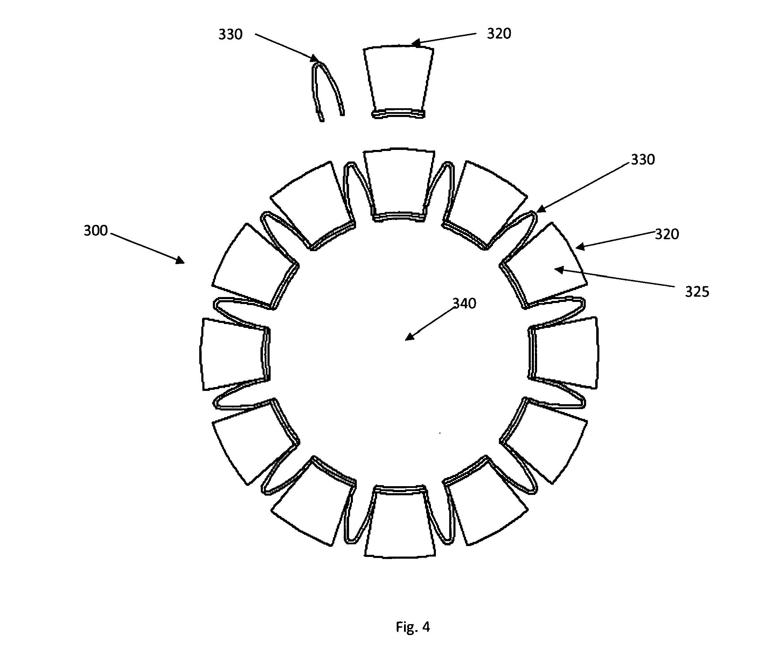

Referring now to Figure 4, there is shown a third embodiment of the present invention. Grip ring 300 comprises: annular segments 320; and resilient linkages 330. The annular segments 320 and resilient linkages 330 are formed individually. This allows the grip ring to be produced fabricated in metal, whilst achieving the required stiffness of the resilient linkages 330. Separately, an individual annular segment 320 and resilient linkage 330 are also shown.

The resilient linkages 330 may be significantly thinner than those in Figures 1 or 2, when produced in metal, to reduce compressive forces required.

The form of the resilient linkages 330 in Figure 4 is similar to the form of the resilient linkages 30 in Figure 1 and the resilient linkages 130 in Figure 2. This form should also work for metal components, provided that the angles of the ogival form are designed to keep the maximum bending below the elastic limit for the material.

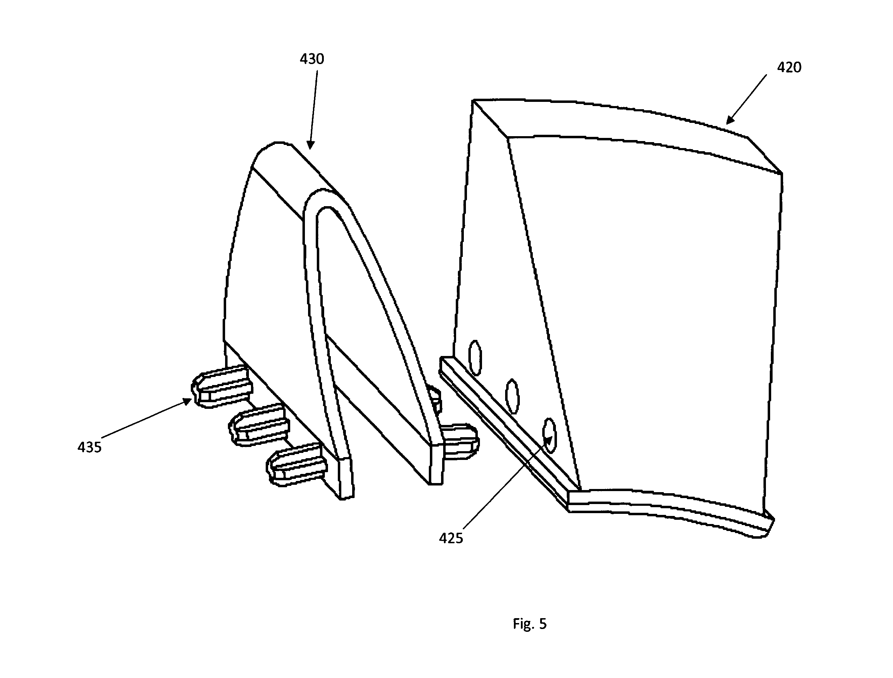

Referring next to Figure 5, there is shown a first embodiment of an annular segment 420 and a resilient linkage 430 for use in the embodiment of Figure 4. The resilient linkage 430 comprises plugs 435 and the annular segment 420 comprises sockets 425.

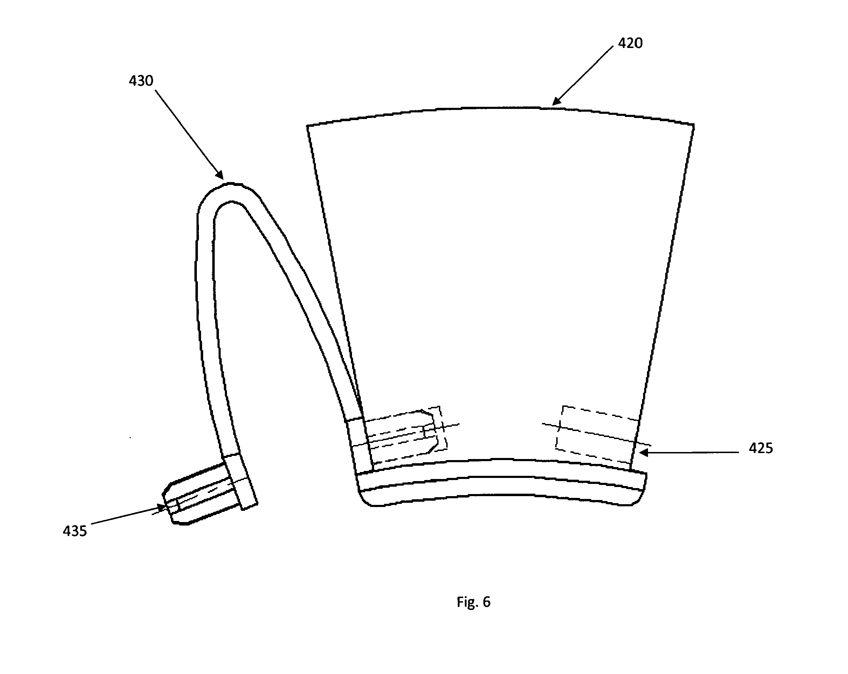

Figure 6 shows a perspective view of the annular segment 420 and resilient linkage 430 when coupled together. The plugs 435 fits into the sockets 425 to couple the annular segment 420 to the resilient linkage 430. This embodiment offers the possibility of breaking the grip ring 300 to allow easier assembly. It also allows the possibility of connecting annular segments together to make a custom size of grip ring.

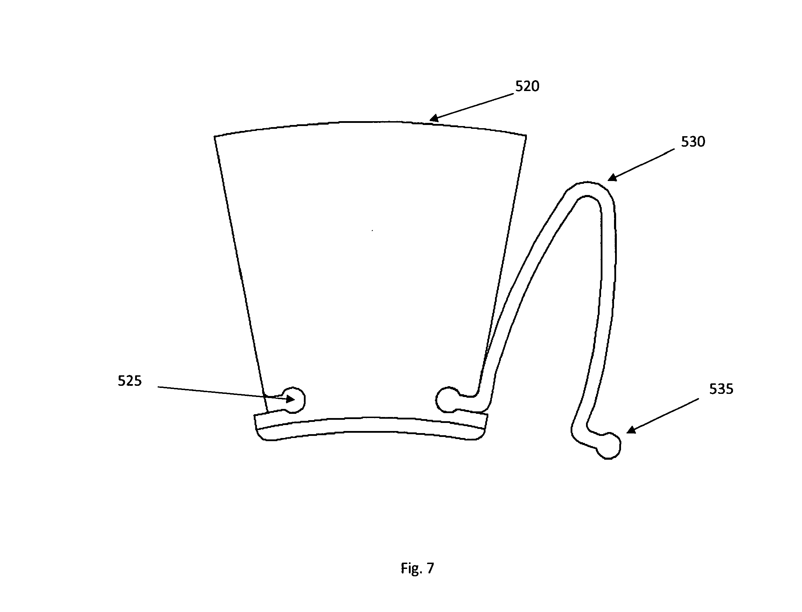

Turning now to Figure 7, there is shown a cross-sectional view of a second embodiment of an annular segment 520 and a resilient linkage 530 for use in the embodiment of Figure 4. Annular segment 520 has a slit 525 and resilient linkage 530 has a corresponding tongue 535. The end of the slit 525 and tongue 535 are enlarged to resist the annular segment 520 and resilient linkage 530 being pulled apart in the direction of linkage. However, the annular segment 520 and resilient linkage 530 may be separated by sliding out the tongue 535 of the resilient linkage 530 from the slit 525 of the annular segment 520.

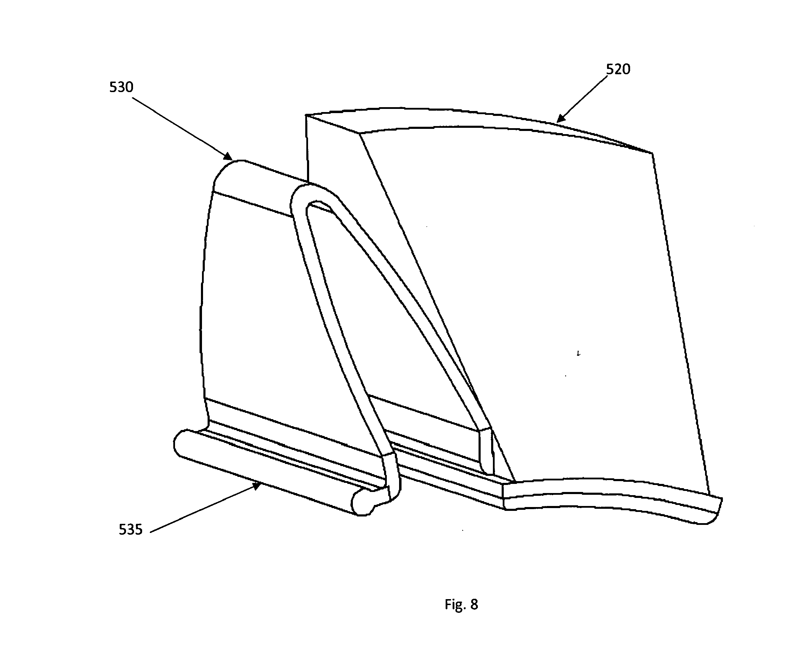

Figure 8 shows a perspective view of the segment and linkage of Figure 7 when coupled together. The tongue 535 of the resilient linkage 530 that is not coupled to an annular segment is shown. Similarly to the first embodiment of the annular segment for use with the grip ring of Figure 4, the possibility of breaking the grip ring to allow easier assembly, and of connecting annular segments together to make a custom size of grip ring are provided.

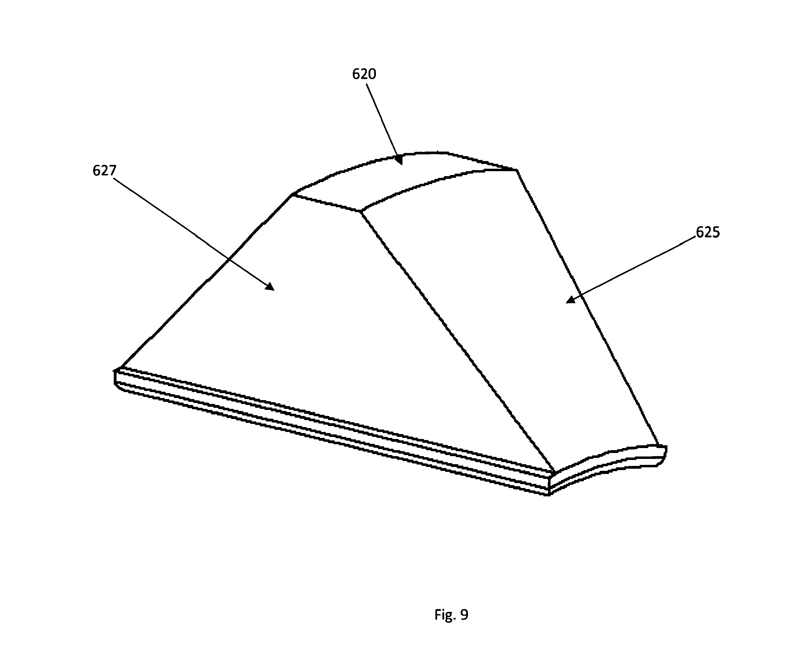

Figure 9 shows an adaptation in the design of an annular segment 620 for use with the present invention. The annular segment 620 has a sloped or tapered surface 625, as discussed above. The sides 627 of the annular segment 620 intended to be adjacent a resilient linkage, are also sloped or tapered.

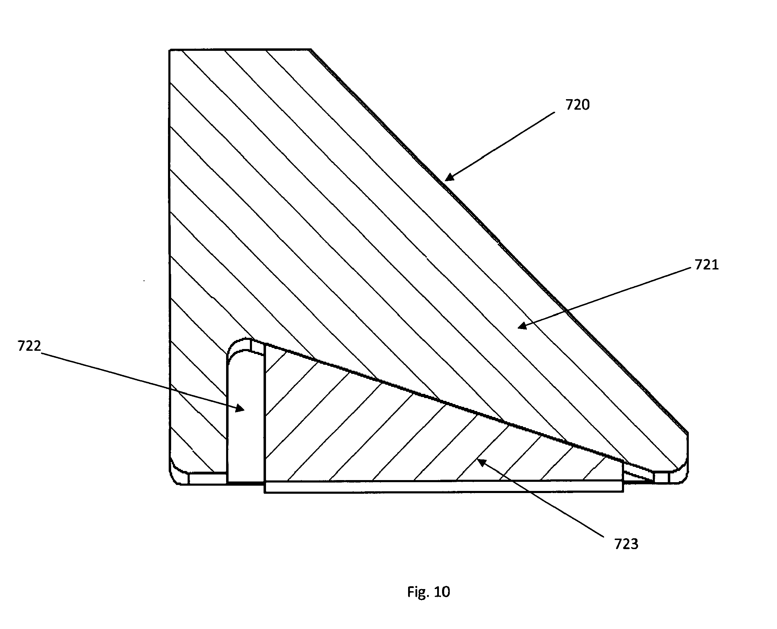

Figure 10 shows a cross-sectional view of an alternative design of an annular segment 720 for use with any of the embodiments of the present invention described above. The annular segment 721 has two parts: a body 721; and a wedge 723. A similar adaptation is described in GB-2363437 and EP-1164325.

The body 721 has a recess 722 on the inner part of the annulus. The recess 722 is tapered. The wedge 723 is shaped to fit into the recess 722 and is also tapered. As an axial load is applied to the grip ring, the wedge 723 slides down the taper of the recess 722, increasing the radial force. In other words, the greater the axial force on the grip ring, the greater the radial compressive force and the tighter it grips. The tapering of the recess 722 and wedge 723 enhances the gripping action.

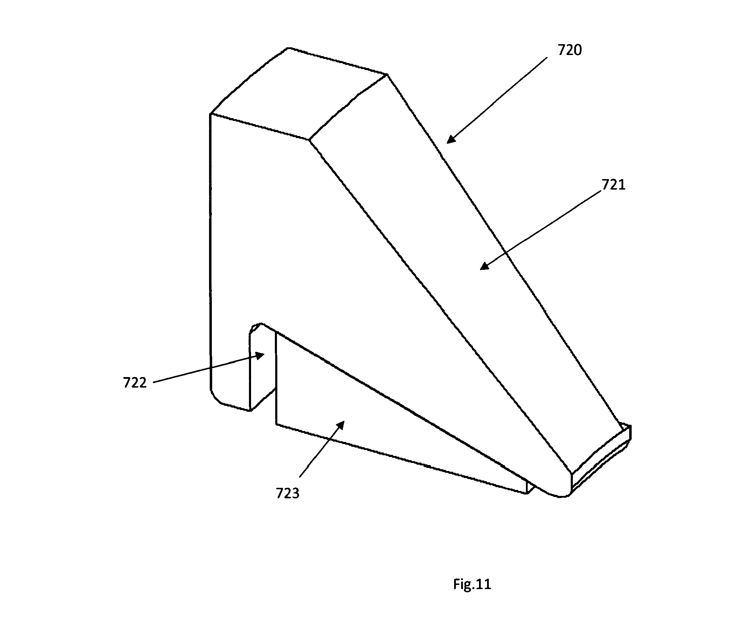

Figure 11 shows a perspective schematic view of the design of Figure 10. The wedge 723 can be seen sitting in the recess 722 of the body 721. The tapered faces of the recess 722 and wedge 723 can also be seen more clearly.

The coefficient of friction between the wedge 723 and the taper face of the recess 722 is an important factor in this behaviour. Too high a coefficient of friction and the wedge 723 sits too high in the recess 722 and gives too little grip. Too low a coefficient of friction and the wedge 723 slides completely out of the recess 722 with catastrophic loss of grip.

Although a number of embodiments of a present invention have been described above, the skilled person will contemplate various modifications.

Although three plugs 435 and sockets 425 are shown for each resilient linkage 430 and annular segment 420 respectively in Figures 5 and 6, the skilled person will appreciate that a fewer or greater number of plugs 435 and sockets 425 may be provided.

## Claims

1. A grip ring comprising:
a plurality of annular segments, coupled by means of a plurality of resilient linkages, the resilient linkages having an ogival shape and being biased to resist radial compression of the grip ring.

2. The grip ring of claim 1, wherein the plurality of annular segments are shaped to convert axial compression of the grip ring into radial compression of the grip ring.

3. The grip ring of claim 2, wherein the plurality of annular segments are formed such that the grip ring is frustoconically shaped.

4. The grip ring of claim 3, wherein the grip ring defines an axis and wherein the plurality of annular segments are shaped such that their frustoconical surface of the grip ring is at an angle of 45 degrees to the axis.

5. The grip ring of any preceding claim, wherein the plurality of resilient linkages are elastic.

6. The grip ring of any preceding claim, wherein one resilient linkage from the plurality of resilient linkages is formed in two parts, the two parts being coupled to form the resilient linkage.

7. The grip ring of any of claim 1 to 5, wherein the plurality of annular segments and the plurality of resilient linkages are integrally formed together.

8. The grip ring of any one of the claims 1 to 6, wherein the plurality of annular segments are individually formed.

9. The grip ring of claim 8, wherein each of the plurality of annular segments comprise at least one recess and wherein each of the plurality of resilient linkages comprise at least one projection, the at least one projection being shaped to correspond with the at least one recess.

10. The grip ring of any preceding claim, wherein at least one of: the plurality of annular segments; and the plurality of resilient linkages are formed from a thermoplastic.

11. The grip ring of any preceding claim, wherein the plurality of resilient linkages are each substantially identical in shape.

12. The grip ring of any preceding claim, wherein the grip ring defines an axis and wherein the plurality of annular segments are each shaped such that one surface of the grip ring is substantially perpendicular to the axis.

13. The grip ring of any preceding claim, wherein at least one of the plurality of annular segments comprises a friction surface, the friction surface being located on the inner surface of the grip ring and comprising an adaptation for friction.

14. The grip ring of claim 13, wherein the adaptation for friction comprises at least one of: a protrusion on the friction surface; a teeth-formation on the friction surface; a thermally-sprayed metal layer; an aluminium oxide grit layer.

15. A method of gripping an elongate member, comprising:
providing a grip ring comprising a plurality of annular segments coupled by means of resilient linkages to form a ring shape, the resilient linkages having an ogival shape and being biased to resist radial compression of the grip ring;
positioning the grip ring such that the elongate member runs through the centre of the grip ring; and
compressing the grip ring axially, to force the grip ring radially inwards thereby, such that the grip ring is compressed upon the elongate member.
